# EUROPEAN PATENT SPECIFICATION

(11) **EP 3 482 910 B1**
(45) Date of publication and mention of the grant of the patent: **22.06.2022**
(21) Application number: 17200671.0
(22) Date of filing: 08.11.2017
(51) Int. Cl.: B29C 64/153, B29C 64/371, B22F 12/00, B22F 10/20, B22F 10/70, B33Y 30/00, B33Y 40/00

(54) **APPARATUS FOR ADDITIVELY MANUFACTURING THREE-DIMENSIONAL OBJECTS**
VORRICHTUNG ZUR GENERATIVEN FERTIGUNG DREIDIMENSIONALER OBJEKTE
APPAREIL DE FABRICATION ADDITIVE D'OBJETS TRIDIMENSIONNELS

(43) Date of publication of application: 15.05.2019
(73) Proprietor: CL Schutzrechtsverwaltungs GmbH, 96215 Lichtenfels (DE)
(72) Inventor: Engel, Viktor, 96482 Ahorn (DE); Winiarski, Daniel, 96231 Bad Staffelstein (DE)
(74) Representative: Hafner & Kohl PartmbB

(56) References cited:
- WO-A1-2010/007394
- WO-A1-2017/102384

## Description

The invention relates to an apparatus for additively manufacturing three-dimensional objects by means of successive layerwise selective irradiation and consolidation of layers of a build material which can be consolidated by means of an energy beam, the apparatus comprising at least one process chamber; a stream generating device allocated to the at least one process chamber, the stream generating device being adapted to generate at least one gas stream streaming through the process chamber during operation of the apparatus; and a connecting line connecting the stream generating device with the process chamber.

Apparatuses for additively manufacturing three-dimensional objects are generally known. Exemplary embodiments of respective apparatuses are selective laser sintering apparatuses, selective laser melting apparatuses, and selective electron beam melting apparatuses, for instance. Yet, metal binder jetting apparatuses may also be deemed as respective apparatuses.

It is also known to generate a gas stream streaming through the process chamber of a respective apparatus during operation of the apparatus. The gas stream serves for removing fume particles or smoke particles generated in the process chamber during operation of the apparatus from the process chamber; a respective gas stream is thus, charged with respective fume particles or smoke particles generated during operation of the apparatus.

Indeed, the removal of respective fume particles or smoke particles from the process chamber via a respective gas stream is known. Yet, there exists a need for further improved gas streaming through the process chamber, particularly in terms of increasing the efficiency of removal of respective fume particles or smoke particles from the process chamber via a respective gas stream.

WO 2017/007394 A1 discloses an additive manufacturing apparatus comprising a gas flow circuit.

It is the object of the present invention to provide an apparatus for additively manufacturing three-dimensional objects allowing for further improved gas streaming through the process chamber, particularly in terms of increasing the efficiency of removal of respective fume particles or smoke particles from the process chamber via a respective gas stream.

The object is achieved by an apparatus according to independent Claim 1. The Claims depending on Claim 1 relate to possible embodiments of the apparatus according to Claim 1.

The apparatus described herein (hereinafter "apparatus") is an apparatus for additively manufacturing three-dimensional objects, e.g. technical components, by means of successive layerwise selective irradiation and consolidation of layers of a build material - the build material may comprise at least one of a metal powder, a ceramic powder, or a polymer powder, for instance - which can be consolidated by means of an energy beam. The energy beam may be an electron beam or a laser beam, for instance. The apparatus can be a metal binder jetting apparatus, a selective laser sintering apparatus, a selective laser melting apparatus, or a selective electron beam melting apparatus, for instance. The apparatus comprises at least one process chamber in which the successive layerwise selective irradiation and consolidation of layers of build material takes place.

The apparatus comprises a number of functional devices which are operable or operated during its operation. Each functional device may comprise a number of functional units. Exemplary functional devices are a build material application device, e.g. a recoating device, configured to apply a layer of build material which is to be selectively irradiated and consolidated in the build plane of the apparatus, and an irradiation device configured to selectively irradiate and thereby, consolidate portions of a layer of build material with at least one energy beam.

In order to remove respective fume particles and/or smoke particles generated in the process chamber of the apparatus during operation of the apparatus, the apparatus further comprises a stream generating device (being another example of a respective functional device of the apparatus). The stream generating device is allocated to the process chamber of the apparatus. The stream generating device is adapted to generate at least one gas stream - the gas stream may also be denoted as process gas stream - streaming through the process chamber of the apparatus. The gas stream may be an inert gas stream. While streaming through the process chamber, i.e. between at least one process chamber inlet and at least one process chamber outlet, the gas stream is charged with fume particles and/or smoke particles generated during operation of the apparatus so that respective fume particles and/or smoke particles are removed from the process chamber via the gas stream. As will be apparent from below, the gas stream may comprise a number of sub-streams of same, similar, or different streaming properties, e.g. streaming profile, streaming velocity, etc. Respective sub-streams may form a resulting stream which may be understood as the sum of respective sub-streams streaming through the process chamber.

The stream generating device is connected with the process chamber, i.e. with respective inlets and outlets provided with the process chamber, i.e. particularly provided with (opposing) walls of the process chamber, via a connecting line. Thus, the apparatus comprises a connecting line connecting the stream generating device with the process chamber. The connecting line comprises a channel-like inner streaming volume through which the gas stream may stream. The connecting line may be built as a hose, pipe, tube, etc. or may comprise a hose, pipe, tube,

The connecting line comprises two connecting line sections, namely an unbranched section and a branched section. The unbranched section is unbranched. The branched section is branched and thus, comprises a plurality of connecting line branches. In other words, the connecting line comprises a first section in which it is unbranched and a second section in which it is branched. The connecting line is thus, branched into at least two connecting line branches at at least one branching point, thereby defining the unbranched section of the connecting line and the branched section of the connecting line. The unbranched section ends at the at least one branching point, the branched section begins at the at least one branching point.

Branching the connecting line in respective connecting line branches - the connecting line branches are typically arranged in a parallel arrangement - at the branching point typically also results in that the gas stream streaming through the connecting line is subdivided into at least two sub-streams at the branching point, whereby a first sub-stream streams through the first connecting line branch and at least one further sub-stream streams through at least one further connecting line branch. Respective sub-streams may form a resulting stream in the process chamber. As will be apparent from below, the streaming properties of respective sub-streams may be individually adjusted and controlled, respectively.

The stream generating device comprises at least two separate stream generating units. A first stream generating unit is allocated to the unbranched section of the connecting line, at least one further stream generating unit is allocated to the branched section of the connecting line. In other words, the stream generating device comprises at least two separate stream generating units, whereby at least one of the at least two stream generating units is allocated to at least one of the at least two connecting line branches. Each stream generating unit may be built as a pumping device, e.g. suction pump, or may comprise a pumping device, e.g. a suction pump.

By comprising at least two separate stream generating units, adjusting of the streaming properties of the gas stream is improved since operation of each stream generating unit may be individually controlled so that each stream generating unit may be adapted to individually adjust the streaming properties of the gas stream or sub-streams which stream(s) through the respective sections of the connecting line the respective stream generating unit is allocated to. As such, the first stream generating unit is particularly adapted to adjust the streaming properties of the gas stream streaming through the unbranched section of the connecting line and the at least one further stream generating unit is particularly adapted to adjust the streaming properties of at least one sub-stream streaming through the branched section of the connecting line. As will be apparent from below, a respective further stream generating unit may be (directly) disposed within a respective connecting line branch.

The at least one further stream generating unit may be allocated to only one connecting line branch or to a plurality of connecting line branches. Hence, given a certain number of connecting line branches, each connecting line branch may comprise its own stream generating unit or a group of connecting line branches may comprise at least one common stream generating unit. In either case, an individual adjustment of the streaming properties of a sub-stream streaming through a connecting line branch having an allocated stream generating unit is possible. Hence, in case that a connecting line branch has no allocated stream generating unit, the streaming properties of the sub-stream streaming through the respective connecting line branch are unaltered.

The branching of the connecting line in respective connecting line branches and the provision and allocation of respective further stream generating units to the connecting line branches allows for an improved gas streaming through the process chamber, particularly in terms of increasing the efficiency of removal of respective fume particles or smoke particles from the process chamber via a respective gas stream.

The respective connecting line branches resulting from branching the connecting line may be arranged and/or connected with the process chamber in different ways. A first connecting line branch is connectable or connected with the process chamber at a first connecting site of the process chamber, the first connecting site of the process chamber may be built as or may comprise a first gas stream inlet into the process chamber, and a further connecting line branch is connectable or connected with the process chamber at a further connecting site of the process chamber, the further connecting site of the process chamber may be built as or may comprise a further gas stream inlet into the process chamber.

The first connecting site is typically spaced apart from the further connecting site. The first connecting site is provided at an upper vertical position, particularly with respect to a reference plane, i.e. the build plane of the apparatus, of the process chamber or a process chamber wall at least partly delimiting the process chamber. The at least one further connecting site is provided at a lower vertical position, particularly with respect to a reference plane, i.e. the build plane of the apparatus, of the process chamber or a process chamber wall at least partly delimiting the process chamber. The at least one further connecting site is provided at a lower vertical position so that a sub-stream being introduced into the process chamber via the at least one further connecting site may stream along a bottom portion of the process chamber, i.e. along a bottom wall of the process chamber and thus, (directly) above the build plane in which respective fume particles and/or smoke particles which are to be removed from the process chamber via the gas stream are generated. As mentioned above, a sub-stream being introduced into the process chamber via the at least one further connecting site and streaming along a bottom portion of the process chamber, particularly along a bottom wall of the process chamber and thus, (directly) above the build plane in which respective fume particles and/or smoke particles which are to be removed from the process chamber via the gas stream are generated has different streaming properties, particularly a higher streaming velocity than other sub-streams.

Thus, respective connecting line branches may be connected with the process chamber at different connecting sites. As such, respective sub-streams which may be introduced into the process chamber via respective connecting line branches may enter the process chamber at different positions, in particular at different vertical positions (heights) relative to a reference plane, e.g. the build plane, of the process chamber. As a result, individually adjustable sub-streams and thus, sub-streams of different streaming properties may be realized at different vertical positions of the process chamber so that a number of (vertically stacked) streaming planes, each being defined by at least one sub-stream, may be implemented.

As is apparent from the above, the further stream generating unit may be adapted to adjust the streaming properties of the sub-stream streaming through the at least one further connecting line branch so that the streaming properties of the sub-stream streaming through a first connecting line branch differ from the streaming properties of the sub-stream streaming through a further connecting line branch. In such a manner, the aforementioned individually adjustable sub-streams and thus, sub-streams of different streaming properties may be realized at different vertical positions of the process chamber so that a number of (vertically stacked) streaming planes, each being defined by at least one sub-stream, may be implemented.

As mentioned before, operation of the respective stream generating unit may be individually controlled. The apparatus thus, comprise a hard- and/or software embodied control unit adapted to, particularly individually, control operation of the first stream generating unit and the at least one further stream generating unit on basis of at least one control criterion. A respective control criterion may define or specify a specific streaming behavior of the respective sub-streams or a resulting stream streaming through the process chamber during operation of the apparatus. A respective control criterion may particularly be an optimization criterion aiming at an optimized streaming of the gas stream under consideration of given operational conditions of the apparatus. While determining a respective control criterion, measurement values of measurement or sensor devices, e.g. measurement or sensor units adapted to sense the streaming properties within the process chamber, etc., provided with the process chamber or apparatus, respectively may be considered.

It was mentioned above that a respective further stream generating unit may be (directly) disposed within a respective connecting line branch. Generally, a respective further stream generating unit may be connected with the respective connecting line branch, particularly disposed in the respective connecting line branch, the at least one further stream generating unit is allocated to. Disposing a respective further stream generating unit directly in the respective connecting line branch typically increases the efficiency of adjusting the streaming properties of the respective sub-stream streaming through the respective connecting line branch since the respective sub-stream directly streams through the respective stream generating unit.

The first stream generating unit and the at least one further stream generating unit may have the same technical configuration or a different technical configuration. In other words, same or similar stream generating units may be used as first and further stream generating units of the stream generating device. Thus, it is possible that at least one further stream generating unit has a different technical configuration, i.e. particularly different operational parameters, in particular a different power output, than the first stream generating unit. As such, the technical configuration, i.e. particularly the operational parameters, of respective stream generating units may be individually chosen under consideration of the gas stream or sub-stream the respective stream generating unit has to "handle" which is a proper measure for increasing the efficiency and energy consumption, respectively of the stream generating device.

Moreover, the invention relates to a method for operating an apparatus for additively manufacturing three-dimensional objects in accordance with claim 9. All annotations regarding the apparatus also apply to the method.

Exemplary embodiments of the invention are described with reference to the Fig., whereby:

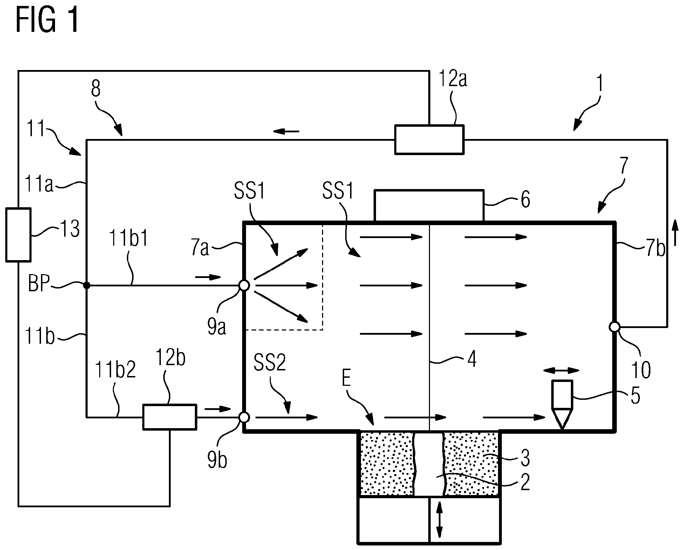

- Fig. 1-3: each show a principle drawing of an apparatus for additively manufacturing three-dimensional objects according to an exemplary embodiment.

Fig. 1 shows a principle drawing of an exemplary embodiment of an apparatus 1 for additively manufacturing three-dimensional objects 2, e.g. technical components, by means of successive layerwise selective irradiation and accompanying consolidation of layers of a powdered build material 3, e.g. a metal powder, which can be consolidated by means of at least one energy beam 4, e.g. a laser beam, according to an exemplary embodiment. The apparatus 1 can be a selective laser melting apparatus, for instance.

The apparatus 1 comprises a number of functional devices which are operable and operated during its operation. Each functional device may comprise a number of functional units. Operation of the functional devices and the apparatus, respective is controlled by a control device (not depicted).

Exemplary functional devices of the apparatus 1 are a build material application device 5, e.g. a coating device, and an irradiation device 6. The build material application device 5 is configured to apply layers of build material 3 in the build plane E of the apparatus 1, the layers being selectively irradiated and consolidated during the additive build-up of the object 2. As indicated by the double-arrow, the build material application device 5 is moveably supported within the process chamber 7 of the apparatus 1. The irradiation device 6 is configured to selectively irradiate and consolidate portions of layers of build material 3 with at least one energy beam 4 during the additive build-up of the object 2.

The apparatus 1 further comprises a stream generating device 8 being another example of a respective functional device of the apparatus 1. The stream generating device 8 is allocated to the process chamber 7 of the apparatus 1. The stream generating device 8 is adapted to generate a gas stream (process gas stream) streaming through the process chamber 7 of the apparatus 1. The gas stream may be an inert gas stream. While streaming through the process chamber 7, i.e. between respective process chamber inlets 9a, 9b and a process chamber outlet 10, the gas stream 8 is charged with fume particles and/or smoke particles generated during operation of the apparatus 1 so that respective fume particles and/or smoke particles are removed from the process chamber 7 via the gas stream. As is apparent from the Fig., the gas stream comprises a number of sub-streams SS1, SS2 of same, similar, or different streaming properties, e.g. streaming profile, streaming velocity, etc. Respective sub-streams SS1, SS2 may form a resulting stream which may be understood as the sum of respective sub-streams SS1, SS2 streaming through the process chamber 7.

The stream generating device 8 is connected with the process chamber 7, i.e. with respective inlets 9a, 9b provided with wall 7a of the process chamber 7 and the outlet 10 provided with (opposing) wall 7b of the process chamber 7 via a connecting line 11. The connecting line 11 comprises a channel-like inner streaming volume through which the gas stream may stream. The connecting line 11 may be built as a hose, pipe, tube, etc. or may comprise a hose, pipe, tube, etc. Even if not depicted in the Fig., the wall 7b, i.e. the wall provided with the outlet 10, may have a cone- or funnel-like shape with the outlet 10 being disposed in the center portion or tip portion of the cone or funnel.

The connecting line 11 comprises two connecting line sections 11a, 11b, namely an unbranched section 11a and a branched section 11b. The unbranched section 11a is unbranched. The branched section 11b is branched and thus, comprises a plurality of connecting line branches 11b1, 11b2. The connecting line 11 is thus, branched into at least two connecting line branches 11b1, 11b2 at at least one branching point BP, thereby defining the unbranched section 11a, and the branched section 11b. The unbranched section ends 11a at the branching point BP, the branched section 11b begins at the at least one branching point BP.

As is clear from the Fig. the connecting line branches 11b1, 11b2 may at least partly be arranged in a parallel arrangement.

Branching the connecting line 11 in respective connecting line branches 11b1, 11b2 at the branching point BP also results in that the gas stream streaming through the connecting line 11 is subdivided into sub-streams SS1, SS2 at the branching point BP1, whereby a first sub-stream SS1 streams through the first connecting line branch 11b1 and a further sub-stream SS2 streams through a further connecting line branch 11b2. As will be apparent from below, the streaming properties of respective sub-streams SS1, SS2 may be individually adjusted and controlled, respectively.

As is apparent from the Fig., the stream generating device 8 comprises two separate stream generating units 12a, 12b. A first stream generating unit 12b is allocated to the unbranched section 11a of the connecting line 11, i.e. may be (directly) disposed within the unbranched section 11a of connecting line 11, a further stream generating unit 12b is allocated to the branched section 11b of the connecting line 11, i.e. may be (directly) disposed within the branched section 11b of connecting line 11. In other words, the stream generating device 8 comprises at least two separate stream generating units 12a, 12b, whereby one stream generating unit 12b is allocated to at least one of the at least two connecting line branches 11b1, 11b2. Each stream generating unit 12a, 12b may be built as a pumping device, e.g. suction pump, or may comprise a pumping device, e.g. a suction pump.

The stream generating units 12a, 12b may have the same technical configuration or a different technical configuration. In other words, same or similar stream generating units 12a, 12b may be used. Thus, it is possible that at least one further stream generating unit 12b has a different technical configuration, i.e. particularly different operational parameters, in particular a different power output, than the first stream generating unit 12a. As such, the technical configuration, i.e. particularly the operational parameters, of respective stream generating units 12a, 12b may be individually chosen under consideration of the gas stream or sub-stream SS1, SS2 the respective stream generating unit has to "handle".

By comprising at least two separate stream generating units 12a, 12b, adjusting of the streaming properties of the gas stream is improved since operation of each stream generating unit 12a, 12b may be individually controlled so that each stream generating unit 12a, 12b may be adapted to individually adjust the streaming properties of the gas stream or sub-streams SS1, SS2 which stream(s) through the respective sections of the connecting line 11 the respective stream generating unit 12a, 12b is allocated to. As is clear from the Fig., the first stream generating unit 12a is adapted to adjust the streaming properties of the gas stream streaming through the unbranched section 11a of the connecting line 11 and the further stream generating unit 12b is adapted to adjust the streaming properties of sub-stream SS2 streaming through connecting line branch 11b2 of the branched section 11b of the connecting line 11.

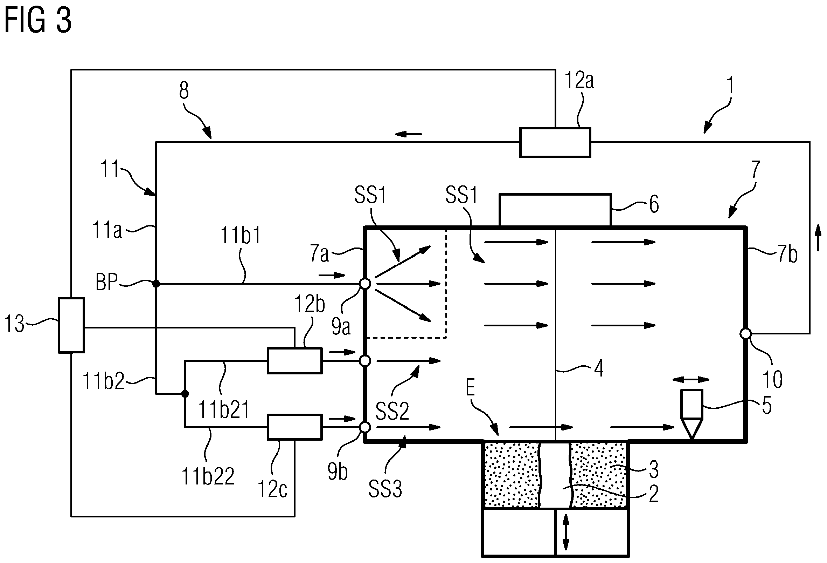

According to the Fig., the further stream generating unit 12b is allocated to only one connecting line branch 11b2. Yet, given a certain number of connecting line branches 11b1 - 11b3 (see e.g. Fig. 3), each connecting line branch 11b1 - 11b3 may comprise its own stream generating unit or a group of connecting line branches 11b1 - 11b3 may comprise at least one common stream generating unit. In either case, an individual adjustment of the streaming properties of a sub-stream SS1, SS2 streaming through a connecting line branch having an allocated stream generating unit is possible (see connecting line branch 11b2 and sub-stream SS2 in Fig. 1). Hence, in case that a connecting line branch has no allocated stream generating unit, the streaming properties of the sub-stream streaming through the respective connecting line branch are unaltered (see connecting line branch 11b1 and sub-stream SS1 in Fig. 1).

The respective connecting line branches 11b1, 11b2 resulting from branching the connecting line 11 may be arranged and/or connected with the process chamber in different ways. According to the Fig., the first connecting line branch 11b1 is connected with the process chamber 7 at a first connecting site of the process chamber 7. The first connecting site comprises first inlet 9a. The further connecting line branch 11b2 is connected with the process chamber 7 at a further connecting site of the process chamber 7. The further connecting site comprises further inlet 9b. As is clear from the Fig., the first connecting site is spaced apart from the further connecting site. The first connecting site is provided at an upper vertical position, particularly with respect to a reference plane, e.g. the build plane E of the apparatus 1, of the process chamber 7. The further connecting site is provided at a lower vertical position, particularly with respect to a reference plane, e.g. the build plane E of the apparatus, of the process chamber. The further connecting site is provided at a lower vertical position so that a sub-stream SS2 being introduced into the process chamber 7 via the further connecting site streams along a bottom (wall) portion of the process chamber 7 and thus, (directly) above the build plane E in which respective fume particles and/or smoke particles which are to be removed from the process chamber 7 via the gas stream are generated. As will be apparent from below, the sub-stream SS1 being introduced into the process chamber 7 via the further connecting site and streaming along the bottom (wall) portion of the process chamber 7 and thus, (directly) above the build plane E may have different streaming properties, particularly a higher streaming velocity than other sub-streams SS1.

Thus, respective connecting line branches 11b1, 11b2 may be connected with the process chamber 7 at different connecting sites. As such, respective sub-streams SS1, SS2 which are be introduced into the process chamber 7 via respective connecting line branches 11b1, 11b2 enter the process chamber at different positions, in particular at different vertical positions (heights) relative to a reference plane, e.g. the build plane E, of the process chamber 7. As a result, individually adjustable sub-streams SS1, SS2 and thus, sub-streams of different streaming properties may be realized at different vertical positions of the process chamber 7 so that a number of (vertically stacked) streaming planes, each being defined by at least one sub-stream SS1, SS2, may be implemented.

As is apparent from the above, the further stream generating unit 12b may be adapted to adjust the streaming properties of the sub-stream SS2 streaming through the further connecting line branch 11b2 so that the streaming properties of the sub-stream SS1 streaming through the first connecting line branch 11b1 differ from the streaming properties of the sub-stream SS2 streaming through the further connecting line branch 11b2. In such a manner, individually adjustable sub-streams SS1, SS2 and thus, sub-streams SS1, SS2 of different streaming properties may be realized at different vertical positions of the process chamber 7 so that a number of (vertically stacked) streaming planes, each being defined by at least one sub-stream SS1, SS2, may be implemented.

Operation of the respective stream generating units 12a, 12b may be individually controlled by means of a hard- and/or software embodied control unit 13 adapted to, particularly individually, control operation of the stream generating units 12a, 12b on basis of at least one control criterion. A respective control criterion may define or specify a specific streaming behavior of the respective sub-streams SS1, SS2 or a resulting stream streaming through the process chamber 7 during operation of the apparatus 1. A respective control criterion may particularly be an optimization criterion aiming at an optimized streaming of the gas stream under consideration of given operational conditions of the apparatus 1. While determining a respective control criterion, measurement values of measurement or sensor devices (not shown), e.g. measurement or sensor units adapted to sense the streaming properties within the process chamber 7, etc., provided with the process chamber 7 or apparatus 1, respectively may be considered.

The dotted box given in Fig. 1, indicates an optional device for enlarging, i.e. particularly widening, sub-stream SS1 and homogenizing the enlarged sub-stream SS1. A respective device may comprise nozzle and/or diffusor elements (not explicitly shown) for widening and homogenizing a respective sub-stream SS1.

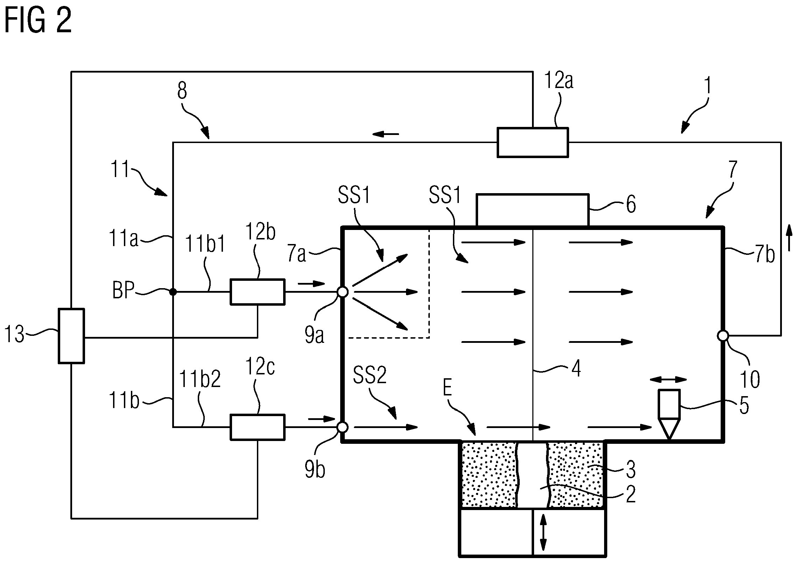

Fig. 2 shows a principle drawing of another exemplary embodiment of an apparatus 1 for additively manufacturing three-dimensional objects 2. Compared with the exemplary embodiment of Fig. 1, Fig. 2 shows that each respective connecting line branch 11b1, 11b2 may be provided with its own further stream generating unit 12b, 12c.

Fig. 3 shows a principle drawing of another exemplary embodiment of an apparatus 1 for additively manufacturing three-dimensional objects 2. Compared with the exemplary embodiments of Fig. 1, 2, Fig. 3 shows that a respective connecting line branch 11b1, 11b2 may be further subdivided in further connecting line branches. 11b21, 11b22.

The apparatus 1 according to the exemplary embodiments given in the Fig. is ready to implement a method for operating an apparatus 1 for additively manufacturing three-dimensional objects 2 by means of successive layerwise selective irradiation and consolidation of layers of a build material 3 which can be consolidated by means of an energy beam 4. The method particularly comprises subdividing a gas stream streaming through a respective connecting line 11 into at least two sub-streams SS1, SS2 at a respective branching point BP, whereby a first sub-stream streams SS1 through a respective first connecting line branch 11b1 and at least one further sub-stream SS2 streams through at least one further connecting line branch 11b2. Thereby, the streaming properties of at least one respective sub-stream SS1, SS2 may be individually adjusted by means of a further stream generating unit 12b allocated to the respective connecting line branch 11b1, 11b2 through which the respective sub-stream SS1, SS2 streams.

## Claims

1. Apparatus (1) for additively manufacturing three-dimensional objects (2) by means of successive layerwise selective irradiation and consolidation of layers of a build material (3) which can be consolidated by means of an energy beam (4), the apparatus (1) comprising:
- at least one process chamber (7);
- a stream generating device (8) allocated to the at least one process chamber (7), the stream generating device (8) being adapted to generate at least one gas stream streaming through the process chamber (7) during operation of the apparatus (1);
- a connecting line (11) connecting the stream generating device (8) with the process chamber (7);
- the connecting line (11) being branched into at least two connecting line branches (11b1 - 11b3) at at least one branching point (BP), thereby, defining an unbranched section (11a) of the connecting line (11) and a branched section (11b) of the connecting line (11), wherein
- a first stream generating unit (12a) of the stream generating device (8) is allocated to the unbranched section (11a) of the connecting line (11), and
- at least one further stream generating unit (12b, 12c) of the stream generating device (8) is allocated to the branched section (11b) of the connecting line (11); wherein
a first connecting line branch (11b1) is connectable or connected with the process chamber (7) at a first connecting site of the process chamber (7) and a further connecting line branch (11b2, 11b3) is connectable or connected with the process chamber (7) at a further connecting site of the process chamber (7), the further connecting site being spaced apart from the first connecting site; and wherein
the first connecting site is provided at an upper vertical position, particularly with respect to a reference plane, e.g. the build plane (E) of the apparatus (1), of the process chamber (7) or a process chamber wall at least partly delimiting the process chamber (7), and the at least one further connecting site is provided at a lower vertical position, particularly with respect to a reference plane, e.g. the build plane (E) of the apparatus (1), of the process chamber (7) or a process chamber wall at least partly delimiting the process chamber (7); further comprising a control unit (13) adapted to, particularly individually, control operation of the first stream generating unit (12a) and the at least one further stream generating unit (12b, 21c) on basis of at least one control criterion such that a sub-stream being introduced into the process chamber (7) via the at least one further connecting site and streaming along a bottom wall of the process chamber (7) and above the build plane (E) in which fume particles and/or smoke particles which are to be removed from the process chamber (7) via the gas stream are generated has a higher streaming velocity than other sub-streams.

2. Apparatus according to Claim 1, **wherein** the connecting line branches (11b1, 11b2, 11b3) are at least partly arranged in a parallel arrangement.

3. Apparatus according to any of the preceding Claims, **wherein** the further stream generating unit (12b) is adapted to adjust the streaming properties of the sub-stream streaming (SS2, SS3) through the at least one further connecting line branch (11b2, 11b3) so that the streaming properties of the sub-stream (SS2, SS3) streaming through the further connecting line branch (11b2, 11b3) differ from the streaming properties of the sub-stream (SS1) streaming through the first connecting line branch (11b1).

4. Apparatus according to any of the preceding Claims, **wherein** the control criterion specifies a specific streaming behavior of the respective sub-streams (SS1, SS2, SS3) or a resulting stream streaming through the process chamber (7) during operation of the apparatus (1).

5. Apparatus according to any of the preceding Claims, **wherein** the at least one further stream generating unit (12a, 12b) is allocated to only one connecting line branch (11b2, 11b3) or to a plurality of connecting line branches (11b2, 11b3).

6. Apparatus according to any of the preceding Claims, **wherein** the at least one further stream generating unit (12b, 12c) is connected with the respective connecting line branch (11b2, 11b3), particularly disposed in the respective connecting line branch (11b2, 11b3), the at least one further stream generating unit (11b2, 11b3) is allocated to.

7. Apparatus according to any of the preceding Claims, **wherein** the at least one further stream generating unit (12b, 12c) has a different power output than the first stream generating unit (12a).

8. Apparatus according to any of the preceding Claims, **wherein** the first stream generating unit (12a) and the at least one further stream generating unit (12b, 12c) is or comprises a pumping unit.

9. Method for operating an apparatus (1) for additively manufacturing three-dimensional objects (2) by means of successive layerwise selective irradiation and consolidation of layers of a build material (3) which can be consolidated by means of an energy beam (4), wherein an apparatus (1) according to any of Claims 1 - 8 is used for implementing the method, wherein the method comprises introducing a sub-stream into the process chamber (7) via the at least one further connecting site provided at a lower vertical position of the process chamber (7) or a process chamber wall at least partly delimiting the process chamber (7), wherein
the sub-stream streams along a bottom wall of the process chamber (7) and above the build plane (E) in which fume particles and/or smoke particles which are to be removed from the process chamber (7) via the gas stream are generated, wherein
the sub-stream has a higher streaming velocity than other sub-streams introduced into the process chamber (7) via at least one other connecting site provided at an upper vertical position of the process chamber (7) or a process chamber wall at least partly delimiting the process chamber (7).

## Patentansprüche

1. Vorrichtung (1) zum additiven Herstellen von dreidimensionalen Objekten (2) durch aufeinanderfolgendes, schichtweises selektives Bestrahlen und Verfestigen von Schichten eines mittels eines Energiestrahls (4) verfestigbaren Baumaterials (3), wobei die Vorrichtung (1) aufweist:
- mindestens eine Prozesskammer (7);
- eine der mindestens einen Prozesskammer (7) zugeordnete Stromerzeugungseinrichtung (8), wobei die Stromerzeugungseinrichtung (8) eingerichtet ist, während des Betriebs der Vorrichtung (1) mindestens einen durch die Prozesskammer (7) strömenden Gasstrom zu erzeugen;
- eine Verbindungsleitung (11), welche die Stromerzeugungseinrichtung (8) mit der Prozesskammer (7) verbindet;
- wobei die Verbindungsleitung (11) an mindestens einem Verzweigungspunkt (BP) in mindestens zwei Verbindungsleitungszweige (11b1 - 11b3) verzweigt ist, wodurch ein unverzweigter Abschnitt (11a) der Verbindungsleitung (11) und ein verzweigter Abschnitt (11b) der Verbindungsleitung (11) definiert werden, wobei
- dem unverzweigten Abschnitt (11a) der Verbindungsleitung (11) eine erste Stromerzeugungseinheit (12a) der Stromerzeugungseinrichtung (8) zugeordnet ist, und
- dem verzweigten Abschnitt (11b) der Verbindungsleitung (11) mindestens eine weitere Stromerzeugungseinheit (12b, 12c) der Stromerzeugungseinrichtung (8) zugeordnet ist; wobei
ein erster Verbindungsleitungszweig (11b1) an einer ersten Verbindungsstelle der Prozesskammer (7) mit der Prozesskammer (7) verbindbar oder verbunden ist und ein weiterer Verbindungsleitungszweig (11b2, 11b3) an einer weiteren Anschlussstelle der Prozesskammer (7) mit der Prozesskammer (7) verbindbar bzw. verbunden ist, wobei die weitere Anschlussstelle von der ersten Anschlussstelle beabstandet ist; und wobei
die erste Verbindungsstelle an einer oberen vertikalen Position vorgesehen ist, insbesondere in Bezug auf eine Referenzebene, z.B. die Bauebene (E) der Vorrichtung (1), der Prozesskammer (7) oder einer die Prozesskammer (7) zumindest teilweise begrenzenden Prozesskammerwand, und die mindestens eine weitere Verbindungsstelle an einer unteren vertikalen Position vorgesehen ist, insbesondere in Bezug auf eine Referenzebene, z.B. der Bauebene (E) der Vorrichtung (1), der Prozesskammer (7) oder einer die Prozesskammer (7) zumindest teilweise begrenzenden Prozesskammerwand; ferner aufweisend eine Steuereinheit (13), die eingerichtet ist, insbesondere individuell den Betrieb der ersten Stromerzeugungseinheit (12a) und der mindestens einen weiteren Stromerzeugungseinheit (12b, 21c) auf der Grundlage mindestens eines Steuerkriteriums zu steuern, so dass ein Teilstrom, der über die mindestens eine weitere Verbindungsstelle in die Prozesskammer (7) eingeleitet wird und entlang einer Bodenwand der Prozesskammer (7) und über der Bauebene (E) strömt, in der Rauchpartikel und/oder Ausdünstungspartikel erzeugt werden, die über den Gasstrom aus der Prozesskammer (7) entfernt werden sollen, eine höhere Strömungsgeschwindigkeit als andere Teilströme hat.

2. Vorrichtung nach Anspruch 1, **wobei** die Verbindungsleitungszweige (11b1, 11b2, 11b3) zumindest teilweise in paralleler Anordnung angeordnet sind.

3. Vorrichtung nach einem der vorangehenden Ansprüche, **wobei** die weitere Stromerzeugungseinheit (12b) eingerichtet ist, die Strömungseigenschaften des Teilstroms (SS2, SS3), der durch den mindestens einen weiteren Verbindungsleitungszweig (11b2, 11b3) strömt, derart einzustellen, dass sich die Strömungseigenschaften des durch den weiteren Verbindungsleitungszweig (11b2, 11b3) strömenden Teilstroms (SS2, SS3) von den Strömungseigenschaften des durch den ersten Verbindungsleitungszweig (11b1) strömenden Teilstroms (SS1) unterscheiden.

4. Vorrichtung nach Anspruch 8, **wobei** das Steuerkriterium ein bestimmtes Strömungsverhalten der jeweiligen Teilströme (SS1, SS2, SS3) oder eines durch die Prozesskammer (7) strömenden, resultierenden Stroms während des Betriebs der Vorrichtung (1) angibt.

5. Vorrichtung nach einem der vorhergehenden Ansprüche, **wobei** die mindestens eine weitere Stromerzeugungseinheit (12a, 12b) nur einem Verbindungsleitungszweig (11b2, 11b3) oder mehreren Verbindungsleitungszweigen (11b2, 11b3) zugeordnet ist.

6. Vorrichtung nach einem der vorhergehenden Ansprüche, **wobei** die mindestens eine weitere Stromerzeugungseinheit (12b, 12c) mit dem jeweiligen Verbindungsleitungszweig (11b2, 11b3) verbunden, insbesondere in dem jeweiligen Verbindungsleitungszweig (11b2, 11b3) angeordnet ist, dem die mindestens eine weitere Stromerzeugungseinheit (11b2, 11b3) zugeordnet ist.

7. Vorrichtung nach einem der vorhergehenden Ansprüche, **wobei** die mindestens eine weitere Stromerzeugungseinheit (12b, 12c) eine andere Leistungsabgabe als die erste Stromerzeugungseinheit (12a) aufweist.

8. Vorrichtung nach einem der vorhergehenden Ansprüche, **wobei** die erste Stromerzeugungseinheit (12a) und die mindestens eine weitere Stromerzeugungseinheit (12b, 12c) eine Pumpeinheit ist oder aufweist.

9. Verfahren zum Betreiben einer Vorrichtung (1) zum additiven Herstellen dreidimensionaler Objekte (2) durch aufeinanderfolgendes, schichtweises selektives Bestrahlen und Verfestigen von mittels eines Energiestrahls (4) verfestigbaren Schichten eines Baumaterials (3), welches durch einen Energiestrahl (4) verfestigt werden kann, wobei eine Vorrichtung (1) nach einem der Ansprüche 1 bis 8 zum Implementieren des Verfahrens verwendet wird, wobei das Verfahren das Einleiten eines Teilstroms in die Prozesskammer (7) über die zumindest eine weitere Verbindungsstelle, die an einer unteren vertikalen Position der Prozesskammer oder Prozesskammerwand vorgesehen ist, welche die Prozesskammer (7) zumindest teilweise begrenzt, wobei der Teilstrom entlang einer Bodenwand der Prozesskammer (7) und über der Bauebene (E) strömt, in der Rauchpartikel und/oder Ausdünstungspartikel erzeugt werden, welche aus der Prozesskammer (7) über den Gasstrom entfernt werden sollen, wobei
der Teilstrom eine höhere Strömungsgeschwindigkeit als andere Teilströme hat, die in die Prozesskammer (7) über zumindest eine andere Verbindungsstelle eingeleitet werden, die an einer oberen vertikalen Position der Prozesskammer (7) oder einer Prozesskammerwand vorgesehen ist, welche die Prozesskammer (7) zumindest teilweise begrenzt.

## Revendications

1. Appareil (1) pour la fabrication additive d'objets tridimensionnels (2) au moyen d'une irradiation et d'une consolidation sélectives par couches successives de couches d'un matériau de construction (3) qui peut être consolidé au moyen d'un faisceau d'énergie (4), l'appareil (1) comprenant :
- au moins une chambre de traitement (7) ;
- un dispositif de génération de courant (8) attribué à l'au moins une chambre de traitement (7), le dispositif de génération de courant (8) étant adapté pour générer au moins un courant gazeux s'écoulant à travers la chambre de traitement (7) pendant le fonctionnement de l'appareil (1) ;
- une ligne de connexion (11) connectant le dispositif de génération de courant (8) à la chambre de traitement (7) ;
- la ligne de connexion (11) étant ramifiée en au moins deux branches de ligne de connexion (11b1 à 11b3) au niveau d'au moins un point de ramification (BP), définissant ainsi une section non ramifiée (11a) de la ligne de connexion (11) et une section ramifiée (11b) de la ligne de connexion (11), dans lequel
- une première unité de génération de courant (12a) du dispositif de génération de courant (8) est attribuée à la section non ramifiée (11a) de la ligne de connexion (11), et
- au moins une autre unité de génération de courant (12b, 12c) du dispositif de génération de courant (8) est attribuée à la section ramifiée (11b) de la ligne de connexion (11) ; dans lequel
une première branche de ligne de connexion (11b1) peut être connectée ou est connectée à la chambre de traitement (7) au niveau d'un premier site de connexion de la chambre de traitement (7) et une autre branche de ligne de connexion (11b2, 11b3) peut être connectée ou est connectée à la chambre de traitement (7) au niveau d'un autre site de connexion de la chambre de traitement (7), l'autre site de connexion étant espacé du premier site de connexion ; et dans lequel
le premier site de connexion est prévu à une position verticale supérieure, en particulier par rapport à un plan de référence, par ex. le plan de construction (E) de l'appareil (1), de la chambre de traitement (7) ou d'une paroi de la chambre de traitement délimitant au moins partiellement la chambre de traitement (7), et l'au moins un autre site de connexion est prévu à une position verticale inférieure, en particulier par rapport à un plan de référence, par ex. le plan de construction (E) de l'appareil (1), de la chambre de traitement (7) ou d'une paroi de la chambre de traitement délimitant au moins partiellement la chambre de traitement (7) ; comprenant en outre
une unité de commande (13) adaptée pour, en particulier individuellement, commander le fonctionnement de la première unité de génération de courant (12a) et de l'au moins une autre unité de génération de courant (12b, 21c) sur la base d'au moins un critère de commande, de telle sorte qu'un sous-courant introduit dans la chambre de traitement (7) via l'au moins un autre site de connexion et s'écoulant le long d'une paroi de fond de la chambre de traitement (7) et au-dessus du plan de construction (E), dans lequel des particules de vapeur et/ou des particules de fumée qui doivent être éliminées de la chambre de traitement (7) via le courant gazeux sont générées, a une vitesse d'écoulement plus élevée que d'autres sous-courants.

2. Appareil selon la revendication 1, **dans lequel** les branches de ligne de connexion (11b1, 11b2, 11b3) sont au moins partiellement agencées selon un agencement parallèle.

3. Appareil selon l'une quelconque des revendications précédentes, **dans lequel** l'autre unité de génération de courant (12b) est adaptée pour ajuster les propriétés d'écoulement du sous-courant (SS2, SS3) s'écoulant à travers l'au moins une autre branche de ligne de connexion (11b2, 11b3) de telle sorte que les propriétés d'écoulement du sous-courant (SS2, SS3) s'écoulant à travers l'autre branche de ligne de connexion (11b2, 11b3) diffèrent des propriétés d'écoulement du sous-courant (SS1) s'écoulant à travers la première branche de ligne de connexion (11b1).

4. Appareil selon l'une quelconque des revendications précédentes, **dans lequel** le critère de commande spécifie un comportement d'écoulement spécifique des sous-courants respectifs (SS1, SS2, SS3) ou d'un courant résultant s'écoulant à travers la chambre de traitement (7) pendant le fonctionnement de l'appareil (1).

5. Appareil selon l'une quelconque des revendications précédentes, **dans lequel** l'au moins une autre unité de génération de courant (12a, 12b) est attribuée à une seule branche de ligne de connexion (11b2, 11b3) ou à une pluralité de branches de ligne de connexion (11b2, 11b3).

6. Appareil selon l'une quelconque des revendications précédentes, **dans lequel** l'au moins une autre unité de génération de courant (12b, 12c) est connectée à la branche de ligne de connexion respective (11b2, 11b3), en particulier disposée dans la branche de ligne de connexion respective (11b2, 11b3), à laquelle l'au moins une autre unité de génération de courant (11b2, 11b3) est attribuée.

7. Appareil selon l'une quelconque des revendications précédentes, **dans lequel** l'au moins une autre unité de génération de courant (12b, 12c) a une puissance de sortie différente de celle de la première unité de génération de courant (12a).

8. Appareil selon l'une quelconque des revendications précédentes, **dans lequel** la première unité de génération de courant (12a) et l'au moins une autre unité de génération de courant (12b, 12c) est ou comprend une unité de pompage.

9. Procédé pour faire fonctionner un appareil (1) pour la fabrication additive d'objets tridimensionnels (2) au moyen d'une irradiation et d'une consolidation sélectives par couches successives de couches d'un matériau de construction (3) qui peut être consolidé au moyen d'un faisceau d'énergie (4), dans lequel un appareil (1) selon l'une quelconque des revendications 1 à 8 est utilisé pour mettre en œuvre le procédé, dans lequel le procédé comprend l'introduction d'un sous-courant dans la chambre de traitement (7) via l'au moins un autre site de connexion prévu à une position verticale inférieure de la chambre de traitement (7) ou d'une paroi de la chambre de traitement délimitant au moins partiellement la chambre de traitement (7), dans lequel
le sous-courant s'écoule le long d'une paroi de fond de la chambre de traitement (7) et au-dessus du plan de construction (E), dans lequel des particules de vapeur et/ou des particules de fumée qui doivent être éliminées de la chambre de traitement (7) via le courant gazeux sont générées, dans lequel
le sous-courant a une vitesse d'écoulement plus élevée que d'autres sous-courants introduits dans la chambre de traitement (7) via l'au moins un autre site de connexion prévu à une position verticale supérieure de la chambre de traitement (7) ou d'une paroi de la chambre de traitement délimitant au moins partiellement la chambre de traitement (7).
